# EUROPEAN PATENT APPLICATION

(11) **EP 4 603 950 A1**
(43) Date of publication of application: **20.08.2025**
(21) Application number: 25157337.4
(22) Date of filing: 12.02.2025
(51) Int. Cl.: G06F 1/3234, G06F 1/3215, G06F 1/3228, G06F 1/3287, B41J 29/38

(54) **IMAGE PRINTING APPARATUS AND METHOD OF CONTROLLING THE SAME**

(30) Priority: 19.02.2024 JP 2024023036
(71) Applicant: CANON KABUSHIKI KAISHA, Tokyo 146-8501 (JP)
(72) Inventor: SUTO, Takaya, Tokyo (JP)
(74) Representative: WESER & Kollegen Patentanwälte PartmbB

(57) **Abstract**

An image printing apparatus (500) having a recording head that ejects a liquid toward a recording medium, a control circuit board (108) that includes a control IC configured to control the image printing apparatus and a power control circuit board (100) that includes a power control IC (101) configured to control power supplied to the control circuit board. The power control IC is capable of entering a first state in which the power control IC outputs power to the control circuit board and a second state in which the power control IC does not output power to the control circuit board, and the power control IC detects a transition signal that causes transition between the first state and the second state.

## Description

### BACKGROUND

### Field

The present application relates to an image printing apparatus and a method of controlling the image printing apparatus.

### Description of the Related Art

An electronic device such as a printer typically has an OFF state in which the electronic device is on standby waiting for a key operation to be made on a power key and an ON state in which the electronic device can perform desired normal operations. In the ON state, necessary power is supplied to each unit of the electronic device so that the electronic device can operate appropriately. On the other hand, in the OFF state, the electronic device is required to operate in a minimum power consumption state by saving power as much as possible.

Japanese Patent Laid-Open No. 2021-118666 describes a control circuit that includes: a power supply circuit configured to output DC power by receiving power supplied from a switching power supply; and a mode control circuit that operates with power supplied from a sub power supply. The control circuit performs mode switching control of the switching power supply with use of the mode control circuit and realizes power saving control by transmitting a disabling signal to the power supply circuit if the voltage does not become equal or lower than a set voltage even after mode switching.

However, in the conventional technology described above, the mode control circuit controls the power supply circuit, and accordingly, it is necessary to continue to always supply power from the sub power supply to the mode control circuit to detect pressing on a power key while an apparatus main body is in an OFF state. Therefore, even when the switching power supply is turned off, power is consumed by the sub power supply, and it is desired to further suppress power consumption.

### SUMMARY

Embodiments of the present disclosure eliminate the above-mentioned issues with conventional technology.

The present disclosure provides advantageous techniques for performing power saving control by suppressing power consumption.

The present invention in its first aspect provides an image printing apparatus as specified in claims 1-14.

The present invention in its second aspect provides a method of controlling an image printing apparatus as specified in claim 15.

Further features of the present disclosure will become apparent from the following description of exemplary embodiments with reference to the attached drawings.

### BRIEF DESCRIPTION OF THE DRAWINGS

The accompanying drawings, which are incorporated in and constitute a part of the specification, illustrate embodiments of the disclosure and, together with the description, serve to explain the principles of the disclosure.
FIG. 1 depicts a perspective view of the external appearance of a printing apparatus according to some embodiments.
FIG. 2 is a block diagram for describing a schematic configuration of a power control IC according to some embodiments.
FIG. 3 is a block diagram for describing configurations of a main controller and the power control IC in the printing apparatus according to some embodiments.
FIG. 4 is a flowchart for describing an example of transition of the state of the printing apparatus according to the embodiment when external power is supplied to the printing apparatus.
FIG. 5 is a flowchart for describing processing performed when the printing apparatus according to the embodiment transitions from an operable state to a standby state.
FIG. 6 is a sequence diagram for describing a sequence of state transitions of the printing apparatus according to the embodiment when power supply is started and when the printing apparatus transitions to an OFF state.

### DESCRIPTION OF THE EMBODIMENTS

Various exemplary embodiments, features, and aspects of the present disclosure will be described hereinafter in detail, with reference to the accompanying drawings. It is to be understood that the following embodiments are not intended to limit the claims of the present disclosure, and that not all of the combinations of the aspects that are described according to the following embodiments are necessarily required with respect to the means to solve the issues according to the present disclosure. Further, in the accompanying drawings, the same or similar configurations are assigned the same reference numerals, and redundant descriptions are omitted. The following describes a printing apparatus in which an ink-jet printing method is used as an example of an image printing apparatus according to the present disclosure, but the present disclosure is not limited to this example.

First, terms used in the present embodiment are defined in advance as follows.

### "Record"

In this specification, the term "record" means not only the formation of information that has meanings, such as letters and figures. This term refers to the formation of any information irrespective of whether or not the information has meanings and irrespective of whether or not the information is made visible so that a person can visually recognize it. This term widely refers to the formation of an image, a design, a pattern, or the like on a recording medium and processing of the medium.

### "Recording medium"

The term "recording medium" not only refers to paper that is used in common printing apparatuses but also widely refers to mediums that can receive ink, such as cloth, plastic films, metal plates, glass, ceramics, wood, and leather.

### "Ink"

The term "ink" is intended to be widely interpreted similarly to the above definition of "record", and refers to mediums including recording materials that can be used in the formation of an image, a design, a pattern, or the like by being applied onto a recording medium, or used in processing of the recording medium or ink treatment. The ink is liquid. The ink treatment mentioned above is solidification or insolubilization of a coloring material contained in the ink applied to the recording medium, for example.

### "Nozzle"

The term "nozzle" refers to an ejection port unless otherwise stated. A liquid path extends through the inside of the nozzle, and an element that generates energy to be used to eject ink is provided inside the nozzle.

### "Scan"

A recording head scans a recording medium to perform recording on the recording medium. Here, movement of the head for recording or movement of the head during acceleration or deceleration of the head relating to recording is referred to as "scanning".

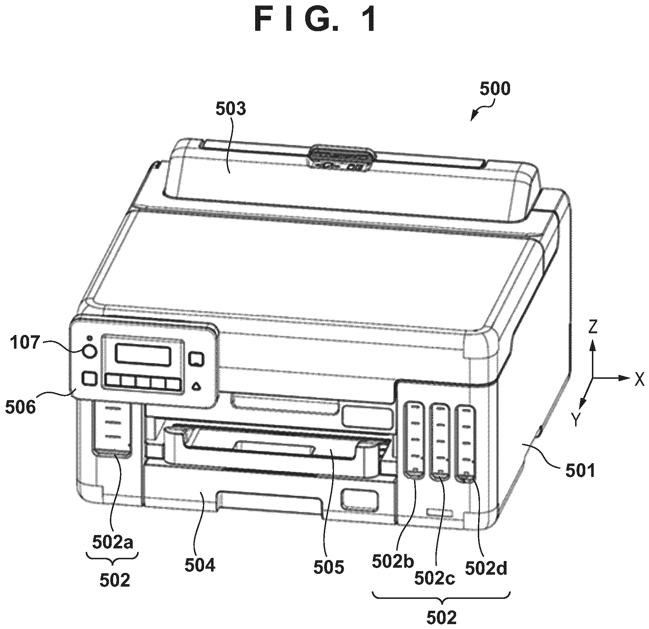

FIG. 1 depicts a perspective view of the external appearance of a printing apparatus 500 according to an embodiment of the present disclosure.

The printing apparatus 500 includes a housing (exterior unit) 501, recording heads (not shown) that perform a recording operation on a recording medium, and ink tanks 502 that are ink housing containers for housing ink to be supplied to the recording heads. The ink tanks 502 are provided at the front side of the housing 501, and the recording heads and the ink tanks 502 are respectively connected by ink flow paths corresponding to respective colors of ink. A black ink tank 502a is provided on the left as viewed from the front side of the printing apparatus 500, and a cyan ink tank 502b, a magenta ink tank 502c, and a yellow ink tank 502d are provided on the right as viewed from the front side of the printing apparatus 500. The printing apparatus 500 also includes a sheet tray 503 and a sheet cassette 504 as feeding units to take a recording medium into the printing apparatus 500. A recorded recording medium is discharged from a discharge portion 505 to the outside of the printing apparatus 500. Also, the printing apparatus 500 includes a sheet feeding motor (not shown) for feeding the recording medium from the sheet tray 503 or the sheet cassette 504 and a motor (not shown) for driving the recording heads in a scanning direction. Furthermore, the printing apparatus 500 includes a motor (not shown) for driving a conveyance roller for conveying the recording medium, and a scanner motor (not shown) used for scanning of a scanner sensor, for example.

The printing apparatus 500 also includes a console unit 506 that is used by a user to perform operations for inputting instructions or the like. It is possible to cause the printing apparatus 500 to transition to an ON state or an OFF state by operating a power key 107 included in the console unit 506.

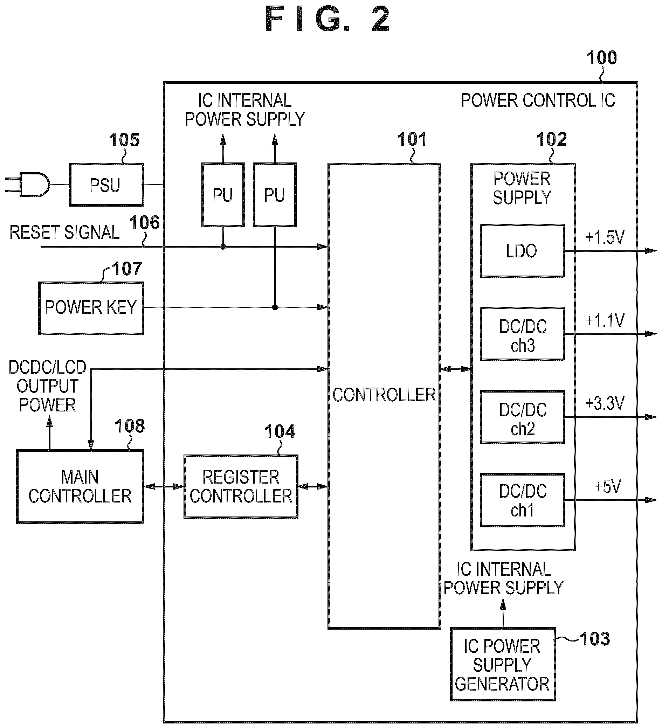

FIG. 2 is a block diagram for describing a schematic configuration of a power control integrated circuit (IC) 100 according to the embodiment of the present disclosure. The power control IC 100 functions as a power control device and is formed on a circuit board on which a circuit (not shown) that controls power supply in the printing apparatus 500 is mounted.

A power saving OFF state can be realized by the power control IC 100. In the embodiment, a standby state in which the apparatus is turned on in response to a user operation is referred to as an "OFF state (soft OFF state)", and this OFF state is a power saving state in which power is supplied from the power control IC 100 in the apparatus. Also, a state in which power is not supplied from the power control IC 100 on the apparatus (i.e., a power supply 102 does not output power) is referred to as the "power saving OFF state (power saving OFF)".

The power control IC 100 generates power supplied to a main controller 108 of the printing apparatus 500 and various units and components included in the apparatus such as various sensors and light emitting diodes (LEDs), although these are not shown in FIG. 2. The power control IC 100 includes a controller 101 that controls the power control IC 100 and the power supply 102 that generates output power. Furthermore, the power control IC 100 includes an IC power supply generator 103 that generates internal power supply that is used for pull-up of a communication signal transmitted to the controller 101 or inside the power control IC 100 and various sensor signals from an external power supply switch or the like. Also, the power control IC 100 includes a register controller 104 for controlling a register that holds settings of the power control IC 100, statuses of input signals, and the like.

The controller 101 controls the entire power control IC 100, and controls output from the power supply 102 and performs control based on settings held by the register of the register controller 104. Furthermore, the controller 101 controls operations of the power control IC 100 based on a reset signal 106 input from a control IC provided outside the power control IC 100 and a user operation made on the power key 107 or the like. When power is supplied from a power supply unit (PSU) 105 to the power control IC 100, internal power supply in the power control IC 100 is started, and a reset state is canceled. The power control IC 100 enters the reset state when the reset signal 106 is asserted (becomes a low level).

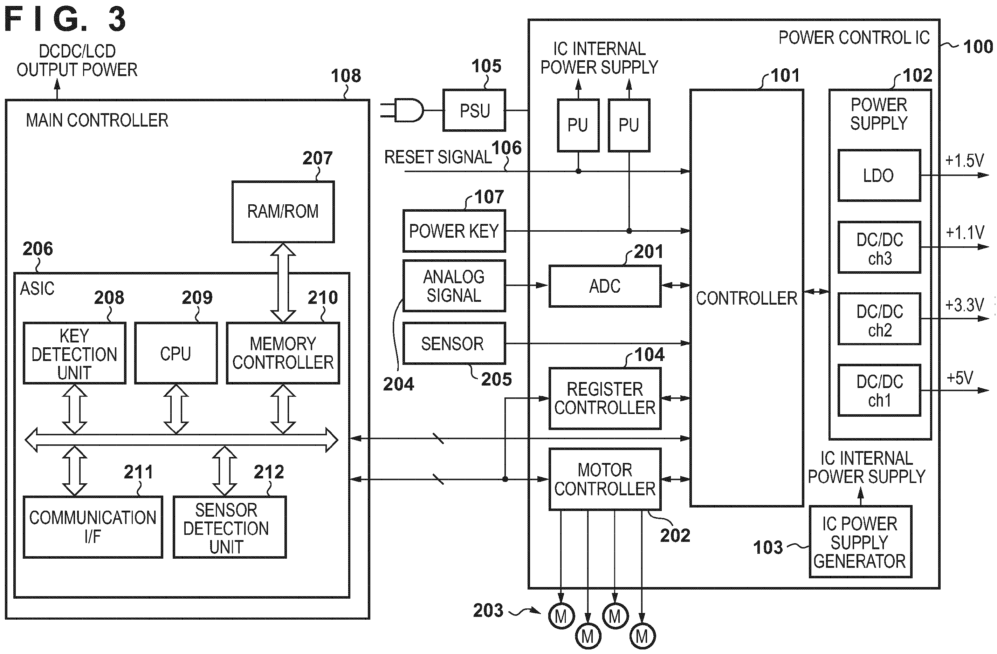

The power supply 102 includes direct current to direct current (DC/DC) converters and a regulator such as a low drop out (LDO) regulator and is controlled by the controller 101. A timing at which the power supply 102 outputs power can be set in accordance with settings held by the register of the register controller 104 such that the power supply 102 starts an output of power after power is supplied from the power supply unit 105 and the reset signal 106 is canceled, as described later with reference to FIG. 3. Alternatively, the power supply 102 may be configured to start an output of power in accordance with settings held by the register of the register controller 104 when an operation for causing transition to the ON state is input with use of the power key 107 or the like.

The register controller 104 holds a setting regarding the output timing of the power supply 102 (DC/DC converters), and the register controller 104 can hold the setting value in the register even when power is not supplied from the power supply unit 105. Note that the register (memory) of the register controller 104 in which setting values are stored is not limited to a non-volatile memory and may also be a volatile memory. If the register is a volatile memory, control may also be performed to set output settings of the power supply 102 after power is supplied from the power supply unit 105. If the printing apparatus 500 starts operation at the timing at which power is supplied from the power supply unit 105, the power supply 102 outputs power when power supply from the power supply unit 105 is started. Then, after the printing apparatus 500 is initialized by the main controller 108, the state where power is supplied from the power supply unit 105 is stored in the register controller 104. Then, the printing apparatus 500 may be caused to transition to the power saving OFF state that is a standby state with low power consumption by changing a setting in the register controller 104 to a setting for keeping the power supply 102 from outputting power.

In the power saving OFF state in which power is not supplied from the power control IC 100, the power supply 102 is on standby without outputting power while the printing apparatus 500 is on standby in the OFF state. Therefore, power consumption can be reduced while the printing apparatus 500 is on standby. Although the power supply 102 shown in FIG. 2 includes three DC/DC converters and one LDO (regulator), there is no particular limitation on the number of DC/DC converters and the number of regulators and the combination thereof, and the power supply 102 may include one or more DC/DC converters and a plurality of regulators. Alternatively, the power supply 102 may include only one or more DC/DC converters, or only one or more regulators.

The power supply 102 can generate output power by inputting output of a DC/DC converter to another DC/DC converter or the LDO (regulator). DC power supplied from the power supply unit 105 is input to the DC/DC converter of the power supply 102, e.g., power of 32 V or 24 V (volts) is input to the power supply 102. As for output voltages of the DC/DC converters, for example, ch1 (DC/DC ch1) of the DC/DC converters outputs 5 V (5V series of power supply) in the printing apparatus 500. Then, the output 5 V is input to DC/DC ch2 and DC/DC ch3, which generate 3.3 V (3V series of power supply) and 1.1 V or 0.9 V (1V series of power supply), respectively. Furthermore, the 3.3 V output from the DC/DC ch2 is input to the LDO, and thus, output power of 1.5 V (memory power supply) is obtained. As for applications of the respective series of power supply, the 5V series of power supply is used to light LEDs and used as power supply for an external booster circuit, for example. Also, the 3V series of power supply is used for communication between the power control IC 100 and the main controller 108 and used as power supply for various sensors, analog signals, and a ROM, for example. The 1V series of power supply is used for internal control of the main controller 108, for example. Furthermore, the 1.5V series of power supply is used for ROM/RAM communication and analog signals, for example. Note that, other than the configuration in which the DC/DC ch3 outputs the 1V series of power supply, a configuration is also possible in which the DC/DC ch3 may generate 1.5 V, which is input to the LDO to generate 1V series of power supply such as 0.9 V.

If the power supply 102 includes two DC/DC converters and two regulators (LDO), 5 V (5V series of power supply) and 3.3 V (3V series of power supply) are generated by the DC/DC ch1 and the DC/DC ch2. Then, 1.1 V (1V series of power supply) and 1.5 V may be generated with use of the two regulators by inputting the generated 3.3 V or 5 V to the two regulators.

It is possible to switch the maximum power (current) that can be output from the DC/DC converters, and when it is desired to reduce power consumption, the power consumption can be reduced by suppressing a chopping frequency of the DC/DC converters or causing the DC/DC converters to perform intermittent operations. When the printing apparatus 500 is in a mode in which the printing apparatus 500 consumes a large amount of current, it is also possible to increase the maximum supply current by increasing the chopping frequency of the DC/DC converters.

The IC power supply generator 103 can generate a desired voltage, and can generate various voltages such as the 5V series of power supply, the 3V series of power supply, and the 1V series of power supply, which are commonly used. The IC power supply generator 103 can generate a plurality of voltages, and a configuration is also possible in which the IC power supply generator 103 generates only one series of power supply such as the 3V series of power supply. Also, the IC internal power supply can be output from the power control IC 100 to the outside, and can be used as power supply for external sensors or the like and pull-up power supply for the reset signal 106, which will be described later, and a signal input via the power key 107 even when power is not output from the power supply 102.

The register controller 104 holds setting values of the power control IC 100 such as settings regarding output and non-output from the various DC/DC converters and the LDO included in the power supply 102. Also, the register controller 104 has a memory function for holding values of input signals and various setting values of the register and the like, and the memory function may be either volatile or non-volatile as described above. For example, the register and setting values that are to be held even when power is not supplied to the power control IC 100 may be configured to be non-volatile, and setting values and input signal values that are used after power supply is started may be configured to be volatile. The register controller 104 can also hold input values and analog signals input from various sensors, which will be described later, and digital values obtained through analog-to-digital conversion of the analog signals. This eliminates the need to supply power to the various sensors and supply power to an IC other than the power control IC 100, the main controller 108, and the like to hold the various values. Accordingly, it is possible to detect signals input to the printing apparatus 500 while realizing the standby state with low power consumption.

Values held by the register controller 104 can be read by the main controller 108 after the printing apparatus 500 is booted can be used to control the printing apparatus 500. Setting values in the register are usually stored in memory regions by assigning an address to each of various settings. However, when it is desired to downsize the register region, it is also possible to allocate one bit to each setting value rather than assigning addresses to the setting values, and thus downsize the memory region and reduce the amount of memory. There is no limitation on a data region of the register controller 104, and a configuration is possible in which a data region is allocated to an address of each function or one bit is allocated to each function.

When the power supply unit 105 is connected to a commercial power supply, power is supplied to the power control IC 100. The power supply unit 105 converts AC power supplied from a common electrical outlet or the like to DC power and supplies the DC power. For example, the power supply unit 105 converts AC power of 100 V or 240 V to DC power of a voltage suitable for use in the printing apparatus 500 including the power control IC 100, such as 32 V or 24 V. There is no limitation to the configuration in which DC power is supplied from the power supply unit 105, and the power control IC 100 may also be caused to operate with power supplied from a power supply unit such as a battery (not shown).

When power is supplied from the power supply unit 105 or the like and the reset signal 106 becomes a high level, the power control IC 100 enters a reset canceled state and is enabled to operate. In FIG. 2, the reset signal 106 is pulled up with the power supply output from the IC power supply generator 103 of the power control IC 100, but it is also possible to pull up the reset signal 106 with use of a peripheral circuit provided outside the power control IC 100.

The power key 107 supplies an input signal for causing the printing apparatus 500 including the power control IC 100 to transition from the OFF state to the ON state or from the ON state to the OFF state. The power key 107 may be constituted by a self-reset type switch whose contact changes only when the power key 107 is pressed, a contact switching switch, or the like. Also, the power key 107 switches the contact with use of a physical mechanism, but it is also possible to use a power key in which a mechanism other than the electrical contact is used, such as a capacitance-type switch or an optical switch. In FIG. 2, a signal from the power key 107 is pulled up with the power supply from the IC power supply generator 103 of the power control IC 100, but it is also possible to pull up the signal with use of a peripheral circuit provided outside the power control IC 100.

The power control IC 100 according to the embodiment includes a detection unit for detecting a transition signal input via the power key 107 or the like. This configuration enables the printing apparatus 500 to transition between the ON state and the OFF state even if power is not supplied to the main controller 108 that determines transitions of a power supply state of the printing apparatus 500.

The main controller 108 is an apparatus controller that controls the printing apparatus 500 for which power supply is controlled by the power control IC 100, and the main controller 108 is connected to the power control IC 100 via a control line. In FIG. 2, the main controller 108 is connected to the controller 101 and the register controller 104 via bus connection. However, the control line is also possible to use a serial signal such as a differential signal, a parallel signal, or a general-purpose IF such as SPI·I2C for the control line. The main controller 108 includes a control unit including a control IC such as an application specific integrated circuit (ASIC) or a CPU and a peripheral circuit such as a memory, as described later with reference to FIG. 3. Other than the configuration including a peripheral circuit, the control unit may also have a configuration including only an integrated circuit in which a plurality of functions is implemented, or the control unit may include an IC and a peripheral circuit, and there is no limitation on the configuration of the control unit. The main controller 108 can communicate with the controller 101 and the register controller 104 of the power control IC 100. The main controller 108 can transmit and receive various settings by communicating with the controller 101 and transmit and receive setting values by communicating with the register controller 104 via the controller 101 or by directly communicating with the register controller 104.

Although FIG. 2 shows a configuration used to perform power saving control of power supply, it is also possible to implement functions other than power supply control in the power control IC 100 as described later with reference to FIG. 3, for example. The functions may be implemented in the power control IC 100 or configured as peripheral circuits, and there is no particular limitation on the manner of implementation. Also, the power control IC 100 is described in the embodiment, but a power control unit such as the power control IC 100 may be realized by plural circuit blocks.

Also, the printing apparatus 500 is described as an example in the embodiment, but the apparatus in which the power control IC 100 is installed is not limited to a printing apparatus, and the power control IC 100 is also applicable to other electronic devices such as a camera.

Next, the following describes a case where functions other than the functions shown in FIG. 2 are implemented in the power control IC 100 with reference to FIG. 3.

FIG. 3 is a block diagram for describing configurations of the main controller 108 and the power control IC 100 in the printing apparatus 500 according to the embodiment. In FIG. 3, units that are common to FIG. 3 and FIG. 2 described above are denoted with the same reference numbers as those used in FIG. 2, and descriptions thereof are omitted.

In FIG. 3, an analog-to-digital converter (ADC) 201 and a motor controller 202 are implemented in the power control IC 100, and an analog signal 204 from a thermistor or the like and an input signal from a sensor 205 of various types, which detects operations made by the user, are input as external signals. The thermistor is used to detect an ambient temperature of the printing apparatus 500 and control the apparatus based on the external temperature, for example. Examples of the sensor 205 include a sensor that detects an operation of setting sheets in the sheet cassette, a sensor that detects an operation of setting sheets on the tray, and a sensor that detects an operation of replacing a recording material such as ink in the recording apparatus 500. The analog signal 204 and the input signal from the sensor 205 may operate with power supplied from the IC power supply generator 103, power output from the power supply 102, or power supplied from the outside. The number of analog signals 204 and the number of signals from the sensor 205 input to the power control IC 100 may each be one or two or more, and there is no limitation on the numbers of signals.

The ADC 201 has a function of converting the input analog signal 204 to a digital signal and a function of sampling the analog signal 204 at constant intervals and converting the sampled signal to a digital signal. The ADC 201 also has a function of averaging the sampled signals and a function of performing various types of computation. For example, when a thermistor signal is input as the analog signal 204 to the ADC 201, the ADC 201 samples the thermistor signal at predetermined constant intervals and converts the sampled signals to digital signals. Then, a value obtained by performing set computation on the digital signals is held by the power control IC 100. Thus, a temperature inside or outside the printing apparatus 500 is detected at constant intervals and the detected temperature is held, and the main controller 108 can check the state of the printing apparatus 500 based on the held information when the main controller 108 is booted, or use the information for control, for example.

Also, the ADC 201 can sample the analog signal 204 with use of the internal power supply from the IC power supply generator 103 even when the printing apparatus 500 is in the power saving OFF state in which power is not output from the power supply 102. Also, when the main controller 108 is operating, the power control IC 100 can output the input analog signal 204 as it is to the main controller 108, or the analog signal 204 can be input to the main controller 108 in parallel to perform processing on the analog signal. In the case where the analog signal 204 is input to the power control IC 100 and the main controller 108 in parallel, it is also possible to provide a circuit (not shown) for selecting which of the power control IC 100 and the main controller 108 that input the analog signal 204 in order to separate power supply for the analog signal 204. It is also possible to perform control by outputting each digital value sampled by the ADC 201 to the main controller 108 when the main controller 108 is operating as well.

Likewise, the input signal from the sensor 205 can be detected with use of the power supply from the IC power supply generator 103 even when the printing apparatus 500 is in the power saving OFF state in which power is not output from the power supply 102. As described above, even when the printing apparatus 500 is in the power saving OFF state, the ADC 201 and the sensor 205 can operate and data from the ADC 201 and the sensor 205 can be held by the register controller 104. After the printing apparatus 500 has transitioned to the ON state, the main controller 108 reads the data held by the register controller 104. Accordingly, when the printing apparatus 500 has entered the ON state, the main controller 108 can grasp the content of operations or the like made during the power saving OFF state, which is a low power consumption state.

For example, if it is possible to detect the fact that sheets were set by the user in the cassette that houses printing paper, the number of set sheets, the size of the sheets, etc., while the printing apparatus 500 is in the power saving OFF state, sheet information has already been detected when the printing apparatus 500 transitions to the ON state. Therefore, there is no need to let the user set sheet information again. In an image capturing apparatus such as a camera, it is possible to detect the fact that a storage medium (e.g., an SD card) was attached or detached or a reproduction button for checking captured images was pressed during the power saving OFF state and hold the detection result. This makes it possible to perform various types of control, such as control for automatically displaying a reproduction screen when the camera transitions to the ON state or after a power key is pressed.

Next, the following describes a configuration including the motor controller 202 and control of motors 203.

The power control IC 100 controls output from the DC/DC converters and the motors 203 with use of a voltage supplied to the power control IC 100. In the embodiment, the voltage input to the power control IC 100 is used as a common voltage of power input to the DC/DC converters and power used to control the motors 203. Although a power supply generating IC and a motor control IC are usually constituted by individual ICs and peripheral circuits, this configuration makes it possible to integrate these ICs into the power control IC 100. This configuration has merits such as a reduction in the area of the circuit board on which the ICs are mounted and saving of the cost due to a reduction in the number of individual ICs. Also, the number of voltages input to the power control IC 100 can be reduced by using the common voltage as the voltage for generating power supply in the power control IC 100 and the voltage for controlling the motors 203. On the other hand, different voltages may also be input to the power control IC 100 as a voltage for the power supply 102 and a voltage for controlling the motors 203, and there is no limitation on the number of voltages input to the power control IC 100.

Control lines between an ASIC 206 and the motor controller 202 may be configured to connect the ASIC 206 to the motor controller 202 and the register controller 104 in parallel, or a configuration is also possible in which control is performed by switching between motor control and register control. For example, if the control line from the main controller 108 is connected in parallel, motor control is performed via the control line while each of the motors 203 is controlled. When none of the motors 203 is controlled (none of the motors 203 is operating), the control line is used for control of the power control IC 100, such as setting of output settings of the power supply 102, and thus, the control line can be used as a common control line. Control of the motors 203 and control of the power control IC 100 can be switched with use of a control switching signal transmitted via a connection switching line, or a command designating either the control of each of the motors 203 or the control of the power control IC 100 at the head of a transmission command of a control signal, when the control switching signal is not used. The ASIC 206 can also control the motor controller 202 and the register controller 104 via the controller 101. It is also possible to control the motor controller 202 and the power control IC 100 at the same time by connecting the ASIC 206 to the motor controller 202 and the power control IC 100 separately.

In the control of the motors 203, if DC power of 32 V or 24 V is supplied from the power supply unit 105 to the power control IC 100 as described above, it is possible to drive the various motors 203 with the DC power of 32 V or 24 V. The power control IC 100 includes a booster (not shown) in the power control IC 100 to drive each of the motors 203, for example. If the power supply unit 105 is a battery such as a lithium ion battery or a power supply, such as an alternating current (AC) adapter, that outputs power of about 5 V or 10 V, the power control IC 100 controls the motor controller 202 and each of the motors 203 with use of a voltage boosted by the booster (not shown). The booster may also be configured as a circuit (booster circuit) that is provided outside the power control IC 100 and supplies the boosted voltage to the power control IC 100. The voltage output from the booster or the boosting circuit can be used for purposes other than the control of each of the motors 203, such as power supply to the power control IC 100 to be input to the power supply 102 or the IC power supply generator 103. A configuration is also possible in which the boosted voltage is used for the control of each of the motors 203, and the voltage prior to be boosted is used for power supply to the DC/DC converters of the power supply 102.

A plurality of motors 203 are used in many products. For example, the sheet feeding motor for feeding sheets from the sheet tray or the sheet cassette, the motor for driving the recording heads in the scanning direction, the motor for driving a roller for conveying sheets, and the scanner motor used for scanning of the scanner sensor are mainly used in the printing apparatus 500. In an image capturing apparatus such as a camera, motors are used for control of a lens barrel, focusing, and control of a shutter, for example. The motors 203 may be DC motors or stepping motors, and there is no limitation on the type of the motors. FIG. 3 shows four motors 203, but there is no limitation on the number of motors, and actually, the number of motors may be one, or two or more.

The motor controller 202 is connected to the ASIC 206 by a control line and can be directly controlled by the ASIC 206. It is possible to adopt a configuration in which the control line is separated for each motor as in the case where the ASIC 206 and the motor controller 202 are connected via bus connection, or a configuration in which all motors are controlled with use of serial signal connection. In the case of the bus connection, pairs of a PHASE signal and an ENABLE signal corresponding to respective motors are used according to the number of motors, and signal lines used for control lines of the power control IC 100 are shared by motor control signals. In the case of the serial connection, control is performed by switching between control of the power control IC 100 and control of each of the motors 203 based on a command transmitted by a serial signal.

Next, the following describes an example of an internal configuration of the main controller 108. Many functions are implemented in an actual apparatus, and the actual apparatus has a complex structure including a plurality of control ICs, various sensors, operation mechanisms, etc., which cannot be shown in FIG. 3, but the following describes constituent elements relating to the embodiment. FIG. 3 shows the ASIC 206 as a central IC of the main controller 108, but a control IC such as a general-purpose CPU or a field programmable gate array (FPGA) may also be used, and there is no limitation to the configuration shown in FIG. 3.

The following describes a configuration of the ASIC 206.

When power supply to the ASIC 206 is started with power supplied from the power supply 102, a CPU 209 executes a control program stored in a ROM 207 via a memory controller 210 and starts to control the printing apparatus 500 in accordance with the control program. A key detection unit 208 can detect whether or not the power key 107 is operated via the power control IC 100. In response to the power key 107 being operated, the printing apparatus 500 can transition to the ON state. At this time, the ASIC 206 can determine whether the printing apparatus 500 transitions from the OFF state to the ON state or from the power saving OFF state to the ON state by reading output settings of the power supply 102 set in the register controller 104. Likewise, a sensor detection unit 212 can detect the state of the sensor 205 in the printing apparatus 500 via the power control IC 100. The ASIC 206 detects a change in the state of the sensor 205 as described above, and executes desired processing as appropriate. Furthermore, the ASIC 206 can communicate with the power control IC 100 via a communication interface (I/F) 211. The communication I/F 211 controls communication performed via a universal serial bus (USB) in the printing apparatus 500 or a wired or wireless LAN, as well as communication with the power control IC 100. I2C or universal asynchronous receiver transmitter (UART) interface protocols may be used in this communication, or the ASIC 206 and the power control IC 100 may also be connected via high-speed communication using a differential signal or PCIe, for example. The communication protocol of the communication I/F 211 is determined according to the circumstances of the printing apparatus 500.

When power is supplied to the ASIC 206, the power control IC 100 transmits the state of the power key 107 to the key detection unit 208 of the ASIC 206 to enable the ASIC 206 to detect an operation made on the power key 107. Likewise, the state of the sensor 205 is transmitted to the sensor detection unit 212 of the ASIC 206 to enable the ASIC 206 to detect the state of the sensor 205. The state where power is supplied to the ASIC 206 includes the ON state (operating state) in which the user can operate the printing apparatus 500 and the OFF state, and a state where power is not supplied to the ASIC 206 is the power saving OFF state.

It is possible to switch whether or not to supply power to various internal circuits included in the power control IC 100. For example, when power is supplied from the power supply 102 to the main controller 108 and the like in the OFF state but the motors 203 are not controlled, it is possible to stop power supply to the motor controller 202 and the motors 203 to reduce standby power consumption of the printing apparatus 500. Note that stopping power supply to the motor control system is an example, and the power control IC 100 can stop unnecessary power supply as appropriate to reduce power consumed by the printing apparatus 500.

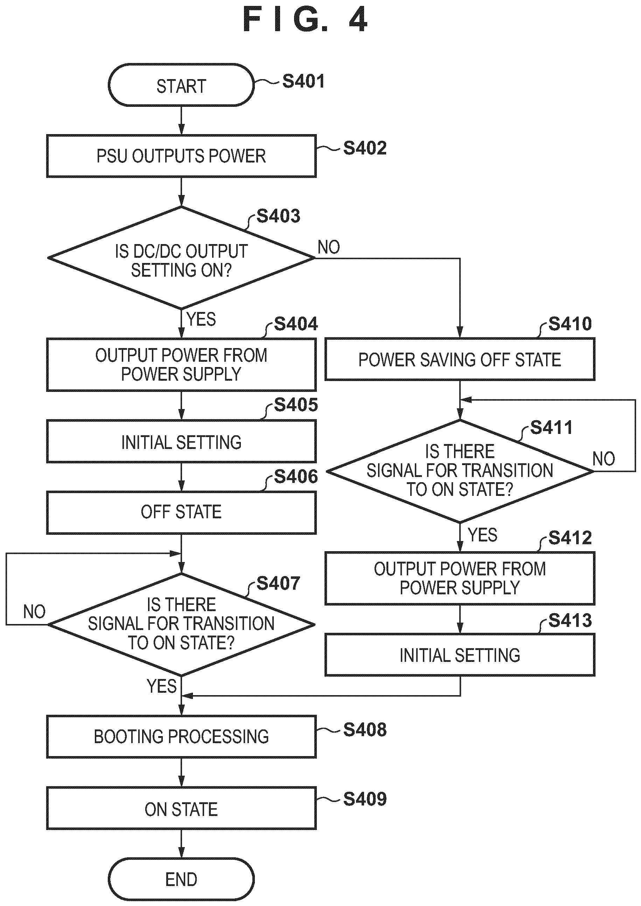

FIG. 4 is a flowchart for describing an example of transition of the state of the printing apparatus 500 according to the embodiment when external power is supplied to the printing apparatus 500.

As described above, the printing apparatus 500 can enter the following three states. A first state is the ON state in which power is supplied from the power supply 102 to the main controller 108 (ASIC 206) after power is supplied from the external power supply unit 105, and the printing apparatus 500 can operate. A second state is the OFF state in which power is supplied from the power supply 102 to the main controller 108 (ASIC 206) but operations of the printing apparatus 500 are stopped, and the printing apparatus 500 is on standby for transition to the ON state. For example, the second state is a state in which it is desirable to perform pre-operation processing such as initialization processing for causing the printing apparatus 500 to enter an operable state. A third state is the power saving OFF state in which power supply from the power supply 102 to the main controller 108 (ASIC 206) is stopped, and the printing apparatus 500 is on standby for transition to the ON state.

In the embodiment, a power saving state in which power saving control is performed on functional blocks that are not used due to no operation being performed for a while is also referred to as the ON state, in addition to the ON state in which the user can operate the printing apparatus 500 via a display unit such as the console unit 506. Furthermore, a standby state in which the printing apparatus 500 can transition to the ON state upon receiving an operation job from the communication I/F 211 such as a USB or a wireless LAN, although nothing is displayed on the display unit, is also referred to as the ON state. This standby state is a mode in which the printing apparatus 500 can be operated when power is supplied to the main controller 108 (ASIC 206). Also, a state where the printing apparatus 500 transitions to the ON state, in which the printing apparatus 500 can operate, upon accepting specific processing in a minimum power consumption state in which power supply to the main controller 108 (ASIC 206) is stopped is referred to as the power saving OFF state.

First, power is supplied from the outside to the power supply unit 105 in step S401. If the power supply unit 105 is a battery, for example, this is a state where the battery is connected. If the power supply unit 105 is an AC adapter, this is a state where the power supply unit 105 is connected to a commercial power supply. Next, in step S402, a power supply voltage generated by the power supply unit 105 is supplied to the power control IC 100. As a result, internal power supply is generated and output by the IC power supply generator 103, and the reset state of the power control IC 100 is canceled.

Next, in step S403, the controller 101 of the power control IC 100 determines whether or not the power supply 102 is set to output power based on setting values held by the register controller 104. If the power supply 102 is set to output power (DC/DC output setting is ON), the processing proceeds to step S404 and the power supply 102 (the DC/DC converters and LDO) is caused to operate and output power. On the other hand, if the power supply 102 is set so as not to output power (DC/DC output setting is OFF), the processing proceeds to step S410 and the printing apparatus 500 transitions to the power saving OFF state in which the power supply 102 does not supply power.

The DC/DC output setting is determined based on setting values held by the register controller 104, and the setting values include timings at which power is output from the DC/DC converters and the LDO included in the power supply 102 and the order in which the DC/DC converters and the LDO output power. Accordingly, the controller 101 performs control such that power is output in accordance with the setting values. The printing apparatus 500 can switch, based on the output setting of the power supply 102, between transition to the OFF state in which power is supplied to the main controller 108 and transition to the power saving OFF state in which power is not supplied to the main controller 108.

In step S404, various voltages are generated by the power supply 102 and supplied to units in the printing apparatus 500, such as the main controller 108.

Next, in step S405, the main controller 108 (ASIC 206) starts processing in accordance with the control program stored in the ROM 207 in response to power supply being started. For example, the main controller 108 loads data into the RAM 207, initializes modules implemented in the ASIC 206, such as the communication I/F 211 and the memory controller 210 to make the modules usable, and prepares for booting, for example. Next, in step S406, after the preparation for booting is complete, the printing apparatus 500 transitions to a standby state (soft OFF state) before transitioning to the ON state. In this standby state, it is possible to reduce power consumption by changing output of the power supply 102 from a normal mode to a low power consumption mode in which the chopping frequency is suppressed.

Then, in step S407, the printing apparatus 500 waits for a transition signal for causing transition to the ON state to be input through a pressing operation made on the power key 107 or the like. In response to the pressing operation made on the power key 107 or input of the transition signal such as a signal for booting the printing apparatus 500, the processing proceeds to booting processing performed in step S408. On the other hand, if no transition signal has been input, the printing apparatus 500 maintains the standby state waiting for input of the transition signal in step S407.

In step S408, the main controller 108 performs processing (booting processing) for causing the printing apparatus 500 to transition to the ON state. For example, the main controller 108 turns on display units such as an LCD of a user interface and LEDs and initializes mechanical operation mechanisms such as the motors 203. Also, if the power supply 102 has been set to the low power consumption mode, the mode is changed to the normal output mode, for example. Then, in step S409, the printing apparatus 500 is caused to transition to the ON state in which the user can operate the printing apparatus 500. If it is determined that there is no need to maintain the operable state after proceeding to step S409, the printing apparatus 500 may enter a power saving standby state in which display on the display units is ceased or the output from the power supply 102 is changed from the normal output mode to the low power consumption mode in which the chopping frequency is suppressed.

On the other hand, if the power supply 102 is set so as not to output power in step S403, the processing proceeds to step S410 and the printing apparatus 500 transitions to the power saving OFF state in which the power supply 102 does not supply power to the main controller 108 (ASIC 206). In this power saving OFF state, power is not supplied from the power control IC 100 to various devices and units, and accordingly, it is possible to realize a low power consumption state. Then, in step S411, the printing apparatus 500 waits for a transition signal for causing transition to the ON state to be input via the power key 107 or the like, similarly to step S407. If the transition signal is input, the processing proceeds to step S412, and various voltages are generated by the power supply 102 and supplied to units in the printing apparatus 500, such as the main controller 108, similarly to step S404. Thus, power is supplied to the main controller 108, and the main controller 108 initializes the modules to make the modules usable in step S413 similarly to step S405, and then the processing proceeds to step S408. Then, the booting processing is performed in step S408, and the printing apparatus 500 transitions to the ON state in step S409.

Through this processing, when power supply is started, the printing apparatus 500 can transition to the OFF state, which is a standby state for waiting for transitioning to the ON state, or the power saving OFF state, which is a standby state for waiting for transitioning to the ON state, based on the setting values held by the register controller 104. In the power saving OFF state, the power control IC 100 operates with internal power supply that is generated by the IC power supply generator 103 and saves power, and therefore, it is possible to further reduce power consumption of the entire apparatus in the standby state.

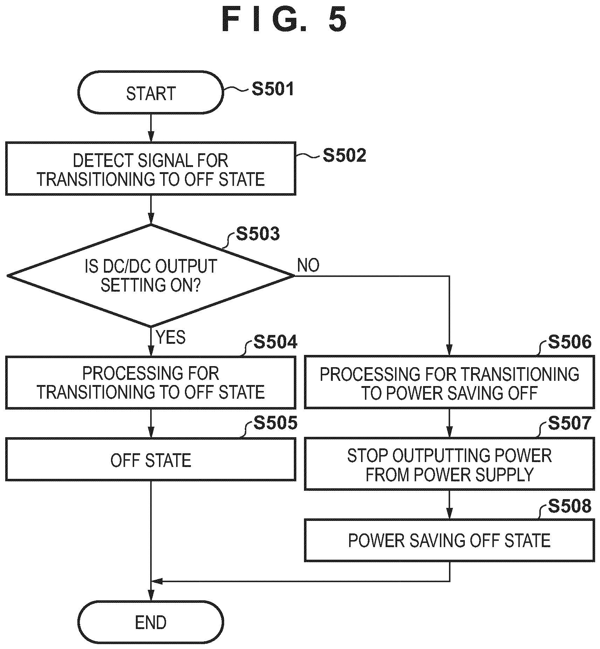

FIG. 5 is a flowchart for describing processing performed when the printing apparatus 500 according to the embodiment transitions from the operable state to a standby state.

Step S501 corresponds to the ON state in step S409 shown in FIG. 4. Next, in response to a signal for causing transition to the OFF state, e.g., a pressing operation made on the power key 107, being detected in the ON state (operable state) in step S502, the processing proceeds to step S503. In step S503, the controller 101 of the power control IC 100 determines, based on setting values held by the register controller 104, whether or not the output setting of the power supply 102 is set such that the power supply 102 outputs power. If the power supply 102 is set to output power (DC/DC output setting is ON), the processing proceeds to step S504, and if the power supply 102 is set so as not to output power, the processing proceeds to step S506.

In step S504, the main controller 108 performs processing for causing the printing apparatus 500 to transition to the OFF state. Here, the display units such as the LCD of the user interface and LEDs are turned off and the mechanical operation mechanisms such as the motors 203 are initialized, for example. Also, the controller 101 changes the mode of the power supply 102 from the normal output mode to the low power consumption mode, for example. After the processing for transitioning to the OFF state is finished, the printing apparatus 500 is caused to transition to the OFF state (standby state) in step S505, and then the processing ends.

On the other hand, in step S506, the main controller 108 starts transition of the printing apparatus 500 to the power saving OFF state. At this time, the display units such as the LCD of the user interface and LEDs are turned off and the mechanical operation mechanisms such as the motors 203 are initialized similarly to step S504, and processing for recording the transition of the power control IC 100 to the power saving OFF state in the register controller 104 is performed. If the transition is recorded, it is possible to determine whether the printing apparatus 500 is in a state right after power supply from the power supply unit 105 is started or the printing apparatus 500 transitioned to the power saving OFF state in a state where the power supply had already been started. This makes it possible to change processing performed when the printing apparatus 500 is booted as described above. After the processing in step S506 is finished, the controller 101 of the power control IC 100 stops output from the power supply 102 to stop power supply to the main controller 108 (ASIC 206) in step S507. Then, in step S508, the printing apparatus 500 transitions to the power saving OFF state in which the printing apparatus 500 waits for a transition signal for causing transition to the ON state to be input via the power key 107 or the like, and then the processing ends.

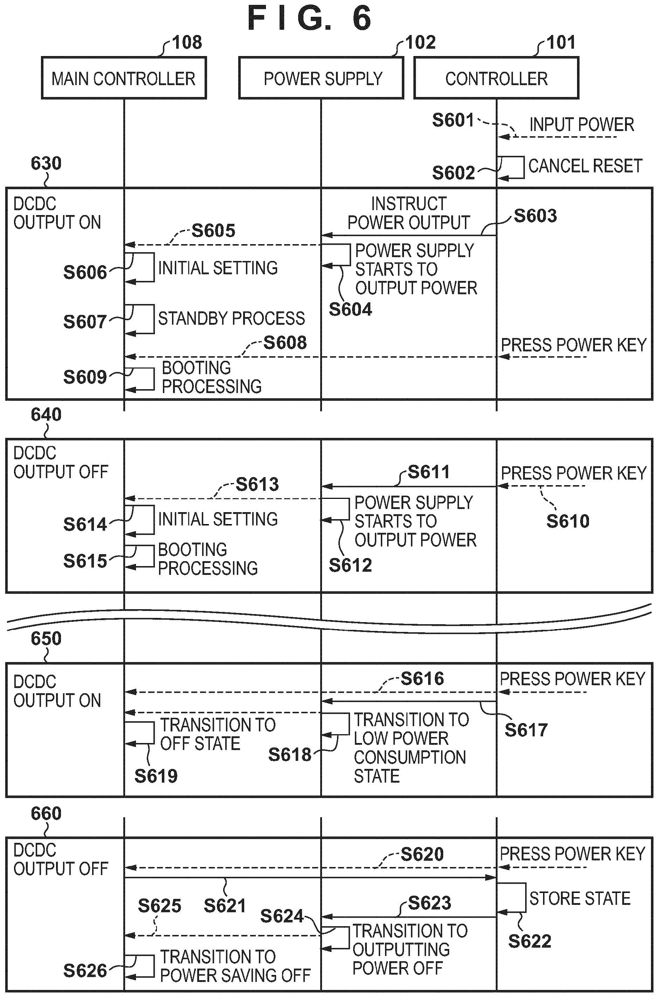

FIG. 6 is a sequence diagram for describing a sequence of state transitions of the printing apparatus 500 according to the embodiment when power supply is started and when the printing apparatus 500 transitions to the OFF state.

First, in response to power being supplied from the outside to the power supply unit 105 in step S601, the reset state of the power control IC 100 (controller 101) is canceled in step S602. In FIG. 6, reference number 630 denotes a case where the DC/DC output setting is ON according to setting values held by the register controller 104, and reference number 640 denotes a case where the DC/DC output setting is OFF.

If the DC/DC output setting is ON, in step S603, the controller 101 instructs the power supply 102 to output power in accordance with the setting values held by the register controller 104. In response to the instruction, the power supply 102 starts to output power in step S604. When power is supplied to the main controller 108 in step S605, the main controller 108 executes the initial setting described above for step S405 in step S606, and then, in step S607, the printing apparatus 500 transitions to the standby state before transitioning to the ON state, as described above for step S406. In response to the power key 107 being pressed in step S608, the booting processing is executed in step S609 similarly to step S408, and the printing apparatus 500 transitions to the ON state.

On the other hand, if the DC/DC output setting is OFF, the printing apparatus 500 keeps on standby in the power saving OFF state in which power is not output from the power supply 102, i.e., the main controller 108 does not operate. In response to the power key 107 being pressed in step S610, the power supply 102 is instructed to output power in step S611. In response to the instruction, various voltages are generated by the power supply 102 and supplied to units in the printing apparatus 500, such as the main controller 108, in step S612. Thus, power is supplied to the main controller 108 in step S613. In step S614, the main controller 108 executes the initial setting described above for step S405, and after finishing the initial setting, executes the booting processing in step S615, and the printing apparatus 500 transitions to the ON state.

Next, the following describes cases where the printing apparatus 500 transitions from the ON state to a standby state. Reference number 650 denotes a case where the DC/DC output setting is ON according to the setting values held by the register controller 104, and reference number 660 denotes a case where the DC/DC output setting is OFF.

In response to the power key 107 being pressed while the printing apparatus 500 is in the ON state, the pressing on the power key 107 is detected by the controller 101 and the main controller 108 in step S616. If the DC/DC output setting is ON, in step S617, the controller 101 of the power control IC 100 instructs the power supply 102 to change the mode from the normal output mode to the low power consumption mode. In response to this instruction, the power supply 102 changes the mode from the normal output mode to the low power consumption mode in step S618. Also, upon detecting the pressing on the power key 107, the main controller 108 performs processing for transitioning to the OFF state in step S619 by turning off the display units such as the LCD of the user interface and LEDs and initializing the mechanical operation mechanisms such as the motors 203, for example. Thus, the printing apparatus 500 is caused to transition to the OFF state (standby state).

On the other hand, if the DC/DC output setting is OFF, in response to the power key 107 being pressed, the pressing on the power key 107 is detected by the controller 101 and the main controller 108 in step S620. Upon detecting the pressing, the main controller 108 performs processing for turning off the display units such as the LCD of the user interface and LEDs and initializes the mechanical operation mechanisms such as the motors 203. Then, in step S621, the main controller 108 performs processing for recording the transition of the power control IC 100 to the power saving OFF state in the register controller 104. In step S622, the controller 101 records information regarding this transition and the like in the register controller 104. Then, in step S623, the controller 101 causes the power supply 102 to stop outputting power. In step S624, the power supply 102 stops outputting power. Consequently, power supply to the main controller 108 (ASIC 206) is also stopped in step S625. Then, in step S626, the main controller 108 transitions to the power saving OFF state in which the main controller waits for a transition signal for causing transition to the ON state to be input via the power key 107 or the like as described for step S508.

In the above embodiment, an example of an ink-jet printing apparatus is described, but the present disclosure can be applied not only to an ink-jet printing apparatus. The present disclosure can be applied not only to a printing apparatus but also to any product for which it is desired to reduce standby power consumption, e.g., a camera or a portable phone such as a smartphone in which a battery is used. For example, if the present disclosure is applied to an air purifier, a sensor is provided on a cover that holds a filter, and opening and closing of the cover in the power saving OFF state are recorded. In this case, when the air purifier transitions from the power saving OFF state to the ON state, it is possible to give a message to the user to confirm whether or not the user replaced the filter.

### Other Embodiments

Embodiments of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiments and/or that includes one or more circuits (e.g., application specific integrated circuit (ASIC)) for performing the functions of one or more of the above-described embodiments, and by a method performed by the computer of the system or apparatus by, for example, reading out and executing the computer executable instructions from the storage medium to perform the functions of one or more of the above-described embodiments and/or controlling the one or more circuits to perform the functions of one or more of the above-described embodiments. The computer may comprise one or more processors (e.g., central processing unit (CPU), micro processing unit (MPU), or the like) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

While the present disclosure includes exemplary embodiments, it is to be understood that the disclosure is not limited to the disclosed exemplary embodiments. The scope of the following claims is to be accorded the broadest interpretation so as to encompass all such modifications and equivalent structures and functions.

## Claims

1. An image printing apparatus (500) comprising:
a recording head configured to eject a liquid toward a recording medium;
a control circuit board (108) that includes a control integrated circuit (IC) configured to control the image printing apparatus; and
a power control circuit board (100) that includes a power control IC (101) configured to control power supplied to the control circuit board,
wherein the power control IC is capable of entering a first state in which the power control IC outputs power to the control circuit board and a second state in which the power control IC does not output power to the control circuit board, and
the power control IC detects a transition signal that causes transition between the first state and the second state.

2. The image printing apparatus according to claim 1,
wherein the power control circuit board further includes at least one direct current to direct current (DC/DC) converter for outputting power to the control circuit board.

3. The image printing apparatus according to claim 2,
wherein the power control circuit board further includes at least one regulator (103) for outputting power to the control circuit board.

4. The image printing apparatus according to any one of claims 1-3,
wherein the transition signal is input in response to a power key (107) of the image printing apparatus being pressed.

5. The image printing apparatus according to any one of claims 1-4, further comprising:
a motor control IC (202) configured to control a motor,
wherein the motor control IC is provided on the power control circuit board.

6. The image printing apparatus according to any one of claims 1-5,
wherein the power control circuit board further includes a power supply unit (102) that generates internal power supply to be used in the power control circuit board when the power control circuit board is connected to a commercial power supply or a battery.

7. The image printing apparatus according to any one of claims 1-6, further comprising:
a storage that stores information for controlling the first state and the second state,
wherein the information includes a setting indicating whether or not to output power to the control circuit board.

8. The image printing apparatus according to claim 7,
wherein the first state includes:
a state in which power is supplied to the control circuit board and the image printing apparatus is in an operable state; and
a state in which power is supplied to the control circuit board but operations of the image printing apparatus are stopped and the image printing apparatus waits for transition to the operable state, and
the second state includes a state in which power supply to the control circuit board is stopped and the image printing apparatus waits for transition to the first state.

9. The image printing apparatus according to claim 8,
wherein, if the information includes a setting indicating that power is not to be supplied to the control circuit board, the power control IC performs control to cause the image printing apparatus to transition to the second state, and upon detecting input of the transition signal in the second state, the power control IC performs control to cause the image printing apparatus to transition to the first state.

10. The image printing apparatus according to claim 9,
wherein the power control circuit board includes at least one direct current to direct current (DC/DC) converter, and the state in which the image printing apparatus waits for transition to the operable state is a state in which a chopping frequency of the DC/DC converter is reduced compared with the first state.

11. The image printing apparatus according to any one of claims 1-10,
wherein the second state is a power saving OFF state in which the image printing apparatus consumes less power compared with the other states.

12. The image printing apparatus according to claim 9,
wherein, when input of the transition signal is detected in the first state, if the information includes a setting indicating that power is not to be supplied to the control circuit board, the power control IC performs control to cause the image printing apparatus to transition to the state in which the image printing apparatus waits for transition to the operable state.

13. The image printing apparatus according to claim 9,
wherein, when input of the transition signal is detected in the first state, if the information includes a setting indicating that power is to be supplied to the control circuit board, the power control IC performs control to cause the image printing apparatus to transition to the second state.

14. The image printing apparatus according to claim 8,
wherein the storage is capable of holding content of an operation made while the image printing apparatus is in a power saving OFF state in which the image printing apparatus consumes less power compared with the other states.

15. A method of controlling an image printing apparatus that includes:
a recording head configured to eject a liquid toward a recording medium;
a control circuit board including a control integrated circuit (IC) configured to control the image printing apparatus; and
a power control circuit board including a power control IC configured to control power supplied to the control circuit board,
wherein the power control IC is capable of entering a first state in which the power control IC outputs power to the control circuit board and a second state in which the power control IC does not output power to the control circuit board,
the method comprising:
detecting a transition signal that causes transition between the first state and the second state; and
controlling power supply to the control circuit board in accordance with a detection state of the transition signal.
